# EUROPEAN PATENT APPLICATION

(11) **EP 0 812 106 A2**
(43) Date of publication of application: **10.12.1997**
(21) Application number: 97109064.2
(22) Date of filing: 05.06.1997
(51) Int. Cl.: H04N 5/235, H04N 7/15

(54) **Method for controlling exposure of a video camera in video conference equipment**

(30) Priority: 07.06.1996 FI 962367
(71) Applicant: NOKIA TECHNOLOGY GmbH, 75175 Pforzheim (DE)
(72) Inventor: Härmä, Esa, c/o Nokia Technology GmbH, 75175 Pforzheim (DE)

(57) **Abstract**

In video conference equipment which comprises a video camera (4) and a display device (1) with a display screen (2), the exposure time of the video camera is controlled in such a way that the video camera (4) is controlled so that it exposes during the time when the display screen (2) is in a passive state. With this, a problem is removed which is caused by the fact that the mirror image (8) of the display is reflected from the spectacles (7) of the presenter and covers the presenter's eyes in the outgoing video image. For the implementation of the invention, it is preferable to control the display device (1) and the video camera (4) together and synchronize their operation.

## Description

The invention is connected to controlling exposure of a video camera in video conference equipment.

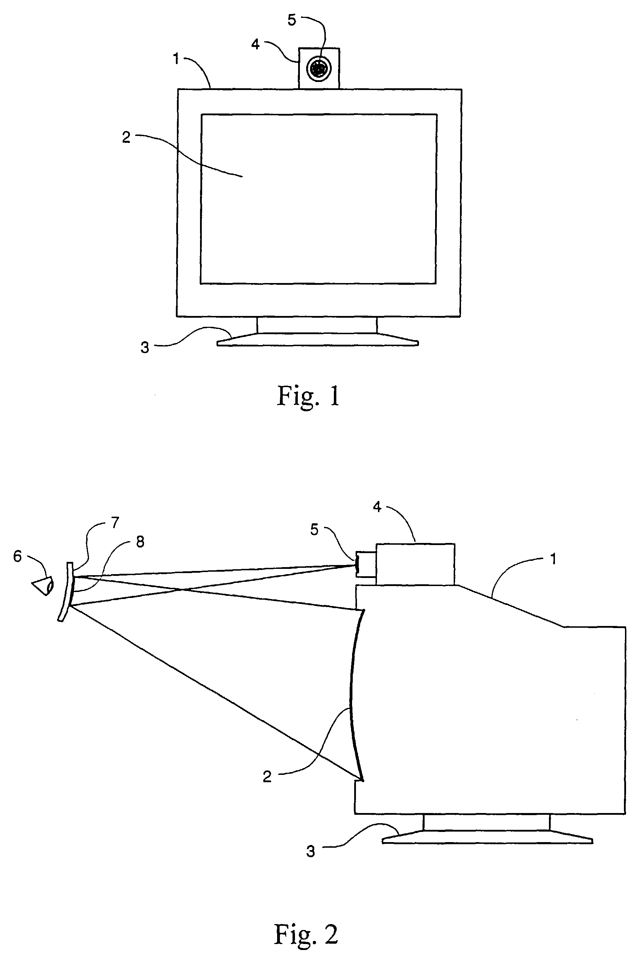

In a video conference which takes place by means of video conference equipment placed on a desk or the equivalent, the incoming picture is shown on a display device of a work station, usually on the display of a personal computer, near to which a camera showing a presenter has been placed to obtain the outgoing video image. The camera and the display of the incoming picture should be as close to each other as possible so that the absence of real direct eye contact disturbs the users as little as possible. The camera of the video conference device has therefore usually been placed in the immediate proximity of the edge of the display screen, typically above or below the display screen. Figs. 1 and 2 show an example of video conference equipment to be placed on a desk wherein a camera 4 has been placed on top of the display device 1 of a personal computer which operates as the display device.

Fig. 2 visualizes a problem of reflection which may be created when equipment like this is used. Light emitted by the display screen 2 of the display device 1 which is on top of a desk and supported by a stand 3 is reflected from the spectacles 7 of the presenter as a mirror image 8 of the display screen to the optics 5 of the camera 4 in which case this mirror image of the display screen is seen in the outgoing video image at the level of the eyes of the presenter. The mirror image covers the eyes of the presenter and the intensity of the mirror image varies, which disturbs the other participants of the conference. This phenomenon is particularly noticeable when the lighting of the surroundings is at a dim level.

The aim of the invention is to alleviate the above described problem of reflection.

To achieve this aim, a method according to the invention for controlling the exposure of a video camera in video conference equipment which comprises a video camera and a display device with a display screen, is characterized in that the video camera is controlled so that it exposes during the time when the display screen is in a passive state.

In an embodiment of the method according to the invention wherein the display device is a CRT display device, the video camera is controlled so that it exposes during the field blanking periods of the display device. To prolong the exposure time, the display device can then be controlled to extend the field blanking period in relation to the field period.

In another embodiment of the method according to the invention, the display screen of the display device is switched into a passive state for certain time intervals during which the video camera is controlled so that it exposes.

It is preferable to synchronize the operation of the video camera to the operation of the display device in such a way that the passive state of the display screen of the display device coincides with the time of the field period of the video camera. The operation can be synchronized further in such a way that the picture sensing elements of the video camera are read immediately after the termination of the passive state of the display screen.

In this application, the passive state of the display screen is construed to mean, that it does not, at that moment, emit light or that it is not otherwise, for example, by using refraction or projection of light, controlled to show the picture. In CRT display devices, the passive state of the display screen prevails during the field blanking period. In other display devices, the passive state of the display screen prevails when the points of the display are not controlled to show the picture.

The invention and its different embodiments are described in the following in greater detail by referring to the attached drawings of which:
Fig. 1 shows a front view of an example of video conference equipment in which the invention can be applied,
Fig. 2 shows a side view of the equipment of Fig. 1 and visualizes the problem which is aimed to be alleviated by means of the invention,
Fig. 3 shows a general and schematic block diagram of video conference equipment shown in Figs. 1 and 2, and an embodiment of the method according to the invention implemented in it and
Fig. 4 shows some signals in an implementation according to Fig. 3.

Figs. 1 and 2 were referred to earlier when the background of the invention was explained.

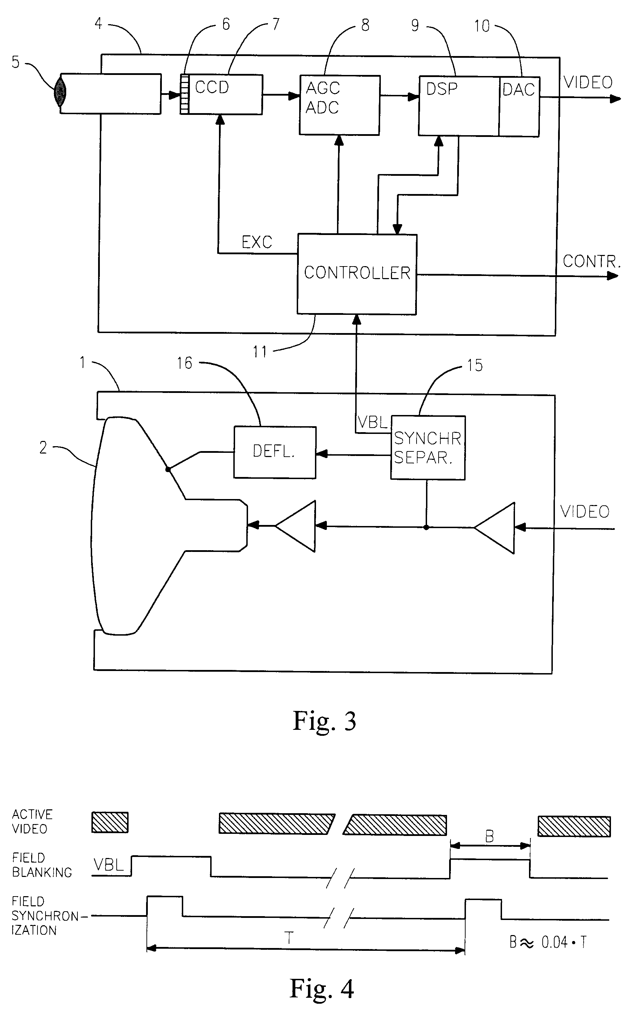

The video conference equipment of Fig. 3 comprises a CCD-type video camera 4 and a CRT-type display device 1. The video camera 4 comprises an optics 5 and a CCD picture sensor 6 as well as circuits 7 connected to it, by means of which a video signal is formed. The video signal processing is typically analogous to blocks 8, 9 and 10. In block 8, automatic gain control and A/D conversion are executed. In block 9, the digitized signal is processed, for example, it can be compressed, and in block 10, a D/A conversion is executed after which the outgoing analog video signal is obtained. Control is represented by block 11 which controls the other blocks or interacts with them. The control of exposure is shown by a control signal EXC. In the case of a CCD picture sensor, it is common that its elements are charged virtually throughout the whole field period, which is typically 20 ms corresponding to 50 Hz field frequency. At the end of the period, the elements are read and at the same time they are discharged. The exposure can be controlled electrically in such a way that discharging is executed without reading the elements at some point of the field period, in which case the exposure time is the end part of the field period starting from the place of the discharge.

In the display device 1, synchronization signals are separated from the incoming video signal to be processed separately in block 15 which controls block 16 representing deflection circuits. Fig. 4 shows some signals which have been separated from the incoming video signal: an active video signal, a field blanking signal VBL and a field synchronizing signal. The active video signal is interrupted for the field blanking periods B of the signal VBL. In the context of the field synchronizing signal, a field period T is indicated.

In the embodiment shown in Fig. 3, the controller 11 of the video camera receives a field blanking signal VBL from block 15 of the display unit. Corresponding to this signal, the controller 11 transmits to CCD sensing circuits 7 a control signal EXC which always induces the discharging of the CCD elements at every onset of the blanking period B. The exposure, in other words, the charging of the elements lasts through period B. The use of the method according to the invention implies that the controls of the video camera 4 and the display device 1 are synchronized with each other at least in such a way that the elements are not read in the video camera 4 during the field periods B of the display device. Obviously it is preferable to synchronize the controls in such a way that the reading of the CCD elements is executed in the video camera always immediately after the termination of the field period B of the display device.

As was mentioned earlier, the field period in video signals is typically, for example, 20 ms. In CRT embodiments, the usual length of the field blanking period is approximately 4 per cent of the length of the field period, in other words, approximately 0,8 ms. In practical embodiments, the exposure time could be within the range 1/1000 - 1/2000 seconds.

The exposure time of a camera can, if the embodiment otherwise permits it, be prolonged by altering the signals of the display device in such a way that the time of the passive state of the display screen, in the CRT display device this is the time of the blanking period, is prolonged but the field period or the updating period stays the same. In other types of monitors than CRT displays, the control of the display can be arranged intentionally in such a way that short moments arise when the display screen is in a passive state and when the camera can be controlled so that it exposes. In the case when there is sufficient light so that the entire time of the passive state of the display screen need not be exploited in the exposure, the exposure time can naturally be controlled to be shorter than the duration of the passive state when necessary. Conversely, when the exposure time is not sufficient when the method according to the invention is used, the situation can be improved, for example, by always summing the field signal with the signal of the previous field in which case a better signal-noise ratio is obtained if the noise follows a Gaussian distribution.

The invention can vary within the limits of the attached claims.

## Claims

1. A method for controlling the exposure of a video camera in video conference equipment which comprises a video camera (4) and a display device (1) with a display screen (2), **characterized** in that the video camera (4) is controlled so that it exposes during the time when the display screen (2) is in a passive state.

2. A method according to claim 1 for controlling the exposure of a video camera in video conference equipment in which the display device (1) is a CRT display device, **characterized** in that the video camera (4) is controlled so that it exposes during the field blanking periods (B) of the display device.

3. A method according to claim 2, **characterized** in that to prolong the exposure time, the display device is controlled to lengthen the field blanking period (B) in relation to the field period (T).

4. A method according to claim 1, **characterized** in that the display screen (2) of the display device (1) is controlled to a passive state for certain time intervals during which the video camera (4) is controlled so that it exposes.

5. A method according to any of the previous claims, **characterized** in that the operation of the video camera (4) is synchronized to the operation of the display device (1) in such a way that the passive state of the display screen of the display device coincides with the field period of the video camera.

6. A method according to claim 5, **characterized** in that the operation of the video camera (4) is synchronized to the operation of the display device (1) in such a way that the picture sensing elements (6) are read immediately after the termination of the passive state (B) of the display screen.
